# DEMANDE DE BREVET EUROPEEN

(11) **EP 3 051 647 A1**
(43) Date de publication de la demande: **03.08.2016**
(21) Numéro de dépôt: 16152169.5
(22) Date de dépôt: 21.01.2016
(51) Int. Cl.: H02H 9/00, H02H 9/02, F02N 11/08

(54) **SYSTEME DE STABILISATION D'UNE TENSION D'ALIMENTATION D'UN RESEAU ELECTRIQUE DE BORD D'UN VEHICULE AUTOMOBILE**

(30) Priorité: 29.01.2015 FR 1550681
(71) Demandeur: VALEO EQUIPEMENTS ELECTRIQUES MOTEUR, 94046 Créteil Cedex (FR)
(72) Inventeur: BAUDESSON, Philippe, 27220 LA BOISSIERE (FR); CHIAPPORI, Guido, 59000 LILLE (FR); CHEMIN, Michaël, 94510 LA QUEUE EN BRIE (FR); DELARUE, Philippe, 59655 VILLENEUVE D'ASCQ (FR); LE MOIGNE, Philippe, 59651 VILLENEUVE D'ASCQ - Cedex (FR); JIN, Yejin, 94700 MAISONS-ALFORT (FR)
(74) Mandataire: Novembre, Christophe Adelphe

(57) **Abrégé**

L'invention concerne un système de stabilisation (1) d'une tension d'alimentation d'un réseau électrique de bord (2) d'un véhicule automobile, du type de ceux limitant une variation de tension d'une source de tension (3) alimentant ledit réseau (2) lors de l'activation d'un équipement électrique (4) dudit véhicule relié audit réseau (2), ledit système comprenant :
- une première unité de limitation (100) du courant circulant entre ladite source de tension (3) et ledit équipement (4), ladite unité (100) étant configurée de sorte à limiter le courant circulant entre la source de tension (3) et l'équipement électrique (4) en fonction d'une variation de tension de la dite source de tension (3) ;
- une deuxième unité de limitation (200) du courant circulant entre ladite source de tension (3) et ledit équipement (4), ladite unité (200) étant configurée de sorte à limiter le courant circulant entre la source de tension (3) et l'équipement électrique (4) à un seuil de courant.

## Description

L'invention concerne un système et un procédé de stabilisation d'une tension d'alimentation d'un réseau électrique de bord d'un véhicule au moment de l'activation d'un équipement électrique. L'invention concerne aussi un équipement électrique tel qu'une machine électrique comprenant un système selon l'invention.

Dans un véhicule, l'activation de certains équipements électriques gourmands en puissance peuvent entrainer une baisse de tension sur le réseau de bord du véhicule qui peut-être préjudiciable au fonctionnement des autres équipements électriques connectés au réseau de bord du véhicule. Ce problème se pose par exemple pour des équipements électriques dont la puissance d'activation est comprise entre 800 W et 2,2 kW.

Par exemple, lors de la mise sous tension d'un démarreur pour assurer le démarrage d'un moteur thermique du véhicule, il se produit un courant d'appel important qui est proche du niveau de courant de court-circuit du démarreur, à savoir, un courant de l'ordre de 1000 ampères. Ce courant décroît ensuite en intensité à mesure que l'induit du démarreur, correspondant au rotor de la machine, monte en vitesse.

A ce pic initial de courant correspond une chute conséquente de la tension aux bornes de la batterie. D'autres chutes de tension moins importantes se produisent ensuite pendant la phase de démarrage et correspondent à des passages par des points morts hauts successifs du moteur thermique.

Le développement de démarreurs dits « renforcés » adaptés pour des systèmes d'arrêt/ relance automatique du moteur thermique (systèmes dits « Stop/Start » ou « Stop & Go » en terminologie anglaise) imposent aujourd'hui de nouvelles contraintes aux équipementiers automobiles, relatives au respect de seuils de tension minima de la batterie lors de l'appel de courant à la mise sous tension du démarreur. Ainsi, dans leurs cahiers de charges, les constructeurs automobiles définissent un premier seuil de tension compris habituellement entre 7 et 9 volts en dessous duquel ne doit pas descendre la tension de batterie. Pour les chutes de tension suivantes, correspondant aux points morts hauts du moteur thermique, la tension de batterie doit rester supérieure à un second seuil de tension compris habituellement entre 8 et 9 volts. Pendant le démarrage du moteur thermique, la tension du réseau de bord du véhicule reste ainsi à une valeur suffisante pour garantir le fonctionnement attendu des équipements du véhicule.

Les démarreurs renforcés ont généralement une puissance supérieure aux démarreurs classiques de manière à obtenir un démarrage rapide pour davantage de confort des utilisateurs. Il en découle un courant d'appel à la mise sous tension plus élevé et donc une première chute de la tension de batterie qui va au-delà des valeurs habituelles et cela en regard d'exigences élevées.

Ce problème de la chute de tension devient encore plus important dans le cas d'un véhicule équipé d'un système « Stop/Start ». Du fait de la fréquence élevée des redémarrages par rapport au démarrage initial d'un véhicule classique, les occupants du véhicule peuvent subir une gêne, et, de plus, la sécurité de certains équipements, comme une direction assistée, peut être compromise.

Les compresseurs de suralimentation entrainés électriquement constituent un autre exemple d'équipements électriques susceptibles d'entrainer une baisse de tension sur le réseau de bord électrique du véhicule lors de leur activation.

Dans l'art antérieur, il a été proposé de limiter le courant d'appel de l'équipement électrique de façon à limiter la chute de tension sur le réseau de bord électrique. Typiquement, la limitation de courant est réalisée par une résistance électrique située entre la source d'énergie du réseau de bord et l'équipement électrique afin de limiter la chute de tension due à l'activation de l'équipement. Il est préférable que la limitation de courant prenne en compte, toutes les résistances électriques entre la batterie du réseau et l'équipement électrique pour configurer au mieux la valeur de la résistance pour limiter la durée d'activation de l'équipement électrique. En particulier, on prend en compte la résistance interne de l'équipement électrique (par exemple 6 mΩ pour un démarreur), du câblage reliant la batterie et l'équipement électrique (par exemple 2 mΩ), ainsi que la résistance interne de la batterie qui alimente le réseau de bord (par exemple 4 mΩ pour une batterie au plomb).

Lorsque les paramètres du réseau changent, par exemple lors d'une variation de la résistance de câblage due à son usure ou son remplacement, ou lors d'une variation de la résistance interne de la batterie due à son remplacement par un autre modèle, certains limiteurs de courant peuvent absorber ces modifications en ajustant la résistance mise en oeuvre lors de la limitation. On connait notamment la demande de brevet français publiée FR3008560 au nom de la demanderesse.

Cependant, il peut arriver que la dynamique du limiteur ne suffise pas à absorber ces variations de paramètre. Ceci est notamment le cas lorsqu'une batterie au plomb est remplacée par une batterie lithium/ion (Li/ion). La résistance interne de la batterie Li/ion est bien plus faible que celle de la batterie au plomb. Par exemple, une batterie au plomb a une résistance interne comprise entre environ 4 et 10 mΩ à température ambiante alors qu'une batterie Li/ion a une résistance interne comprise entre environ 1 et 4 mΩ à température ambiante. La résistance interne de la batterie Li/ion est comparativement si faible que la chute de tension occasionnée par l'activation de l'équipement électrique est beaucoup plus faible que pour une batterie au plomb, si bien que le courant d'appel est moins limité. Le courant d'appel peut alors atteindre des valeurs élevées, par exemple comprises entre 1000 et 1600 A, susceptibles d'endommager l'équipement électrique.

Il est donc recherché un système de limitation de courant ou un procédé de limitation de courant qui améliore la gestion des changements de paramètres du réseau électrique de bord, tel que la variation de la résistance interne de la batterie alimentant le réseau de bord à la suite du remplacement d'une batterie au plomb par une batterie Li/ion.

A cet effet, l'invention concerne un système de stabilisation d'une tension d'alimentation d'un réseau électrique de bord d'un véhicule automobile, du type de ceux limitant une variation de tension d'une source de tension alimentant ledit réseau lors de l'activation d'un équipement électrique dudit véhicule relié audit réseau, ledit système comprenant :
- une première unité de limitation du courant circulant entre ladite source de tension et ledit équipement, ladite unité étant configurée de sorte à limiter le courant circulant entre la source de tension et l'équipement électrique en fonction d'une variation de tension de la dite source de tension par rapport à une tension de référence, notamment lors de l'activation de l'équipement électrique ;
- une deuxième unité de limitation du courant circulant entre ladite source de tension et ledit équipement, ladite unité étant configurée de sorte à limiter le courant circulant entre la source de tension et l'équipement électrique à un seuil de courant, notamment lors de l'activation de l'équipement électrique.

En particulier, l'équipement électrique est une machine électrique. L'activation correspond alors notamment à une mise en rotation de ladite machine, en particulier lors du démarrage du véhicule ou d'un moteur thermique du véhicule. Plus particulièrement, la machine électrique entraîne un compresseur de suralimentation de véhicule automobile destiné à un système de suralimentation d'un moteur thermique du véhicule et/ou la machine électrique est comprise dans un démarreur réalisant un démarrage d'un moteur thermique du véhicule.

Lorsque la résistance interne de la batterie diminue fortement, par exemple d'un rapport 4 environ à température ambiante, ou d'un rapport compris entre 2 et 10 à température ambiante, la résistance entre la source de tension et l'équipement est également diminuée. La dynamique de la première unité de limitation est impactée par cette diminution de résistance interne. La deuxième unité de limitation de courant permet d'éviter que la dynamique de la première unité entraine des courants trop élevés dans le réseau de bord. Grace à la deuxième unité de limitation de courant, le courant circulant entre la source de tension et l'équipement électrique reste limitée à une intensité maximale. Ainsi, le système de stabilisation peut respecter des contraintes de courant du réseau de bord et des équipements qui lui sont connectés. Plus généralement, grâce à la deuxième unité de limitation, le système peut gérer toute variation de la résistance entre la source de tension et l'équipement électrique.

En particulier, le seuil de courant reste fixe pour un équipement électrique donné. Autrement dit, le seuil de courant ne varie pas pour un équipement électrique donné, en particulier pour l'équipement électrique activé. Par exemple, le seuil de courant prend une valeur comprise entre 800 et 1000 A, notamment pour un démarreur. Cependant, le seuil de courant pourrait varier en fonction d'un état d'usure de l'équipement électrique. Le seuil de courant correspond à un seuil d'intensité du courant.

Selon un mode de réalisation, le seuil de courant est fonction d'une puissance maximale, ou d'un courant maximal, supportés par ledit équipement électrique. Notamment, le seuil de courant est fonction d'une puissance maximale, ou d'un courant maximal, supporté par les balais ou les enroulements d'une machine de l'équipement électrique, en particulier lorsque l'équipement électrique est un démarreur ou un compresseur de suralimentation.

Selon un mode de réalisation, la première unité de limitation est configurée de manière à asservir le courant circulant entre la source de tension et l'équipement électrique à une première intensité de référence, la dite première intensité de référence étant fonction de ladite variation de tension.

En particulier, ladite première intensité de référence est générée par une boucle de tension.

Selon une variante de ce mode de réalisation, la première unité de limitation est configurée de manière à asservir le courant circulant entre la source de tension et l'équipement électrique à la première intensité de référence lorsque cette première intensité de référence est inférieure en valeur absolue au seuil de courant ; et la deuxième unité de limitation est configurée de manière à asservir le courant circulant entre la source de tension et l'équipement électrique à la valeur du seuil de courant lorsque cette première intensité de référence est supérieure en valeur absolue au seuil de courant.

Selon un mode de réalisation, la deuxième unité est configurée pour limiter le courant circulant entre ladite source de tension et ledit équipement en imposant une deuxième intensité de référence à la première unité de limitation. Notamment, cette intensité de référence est fonction du seuil de courant auquel le courant circulant entre la source de tension et l'équipement est limité. En particulier, cette intensité de référence est égale au seuil de courant.

Selon un mode de réalisation, la première unité comprend une résistance variable en fonction de ladite variation de tension, ladite résistance variable étant connectée en série avec ladite source de tension et ledit équipement.

Selon une variante de modes de réalisation précédents, ladite résistance variable est contrôlée par une boucle de courant principale en fonction de la première intensité de référence ou de la deuxième intensité de référence.

En particulier, la deuxième unité de limitation délivre la deuxième intensité de référence à ladite résistance variable lorsque la première intensité de référence est supérieure en valeur absolue au seuil de courant.

Selon une variante de modes de réalisation précédents, ladite résistance variable comprend un ou plusieurs interrupteurs de puissance en parallèle configurés pour fonctionner en régime linéaire de manière à réaliser ladite résistance variable.

En particulier, les interrupteurs sont des transistors, notamment des transistors à effet de champ. Les transistors peuvent être de type MOSFET (acronyme de "Metal Oxyde Semiconductor Field Effect Transistor" en anglais, c'est-à-dire "Transistor à Effet de Champ à Semi-conducteur à Oxyde Métallique").

L'invention concerne aussi un procédé de stabilisation d'une tension d'alimentation d'un réseau électrique de bord d'un véhicule automobile, du type de ceux limitant une variation de tension d'une source de tension alimentant ledit réseau lors de l'activation d'un équipement électrique dudit véhicule relié audit réseau, ledit procédé comprenant :
- la limitation du courant circulant entre ladite source de tension et ledit équipement en fonction d'une variation de tension de la dite source de tension par rapport à une tension de référence ;
- la limitation du courant circulant entre ladite source de tension et ledit équipement à un seuil de courant.

Le procédé peut comprendre l'une quelconque des caractéristiques décrites précédemment en relation avec le système selon l'invention.

L'invention concerne également une machine électrique destinée à être embarquée dans un véhicule automobile comportant un système de stabilisation d'une tension d'alimentation d'un réseau électrique de bord selon l'invention intégré. Autrement dit le système selon l'invention est intégrée dans la machine.

La machine est notamment comprise dans un démarreur de moteur thermique ou dans un compresseur de suralimentation d'un moteur thermique.

Les spécifications détaillées de l'invention sont données dans la description qui suit en liaison avec les dessins ci-annexés. Il est à noter que ces dessins n'ont d'autre but que d'illustrer le texte de la description et ne constituent en aucune sorte une limitation de la portée de l'invention.

Les **Figures 1a et 1b** montrent respectivement une chute de tension d'une source de tension alimentant un réseau électrique de bord de véhicule automobile au moment du lancement d'un équipement électrique, et le pic d'intensité correspondant, sans le système de stabilisation (traits pleins) et avec le système de stabilisation selon l'invention (traits en pointillé).

La **Figure 2** est un schéma de principe simplifié d'un mode de réalisation du système de stabilisation d'une tension d'alimentation d'un réseau électrique de bord d'un véhicule automobile selon l'invention.

La **Figure 3** est un exemple de mise en oeuvre d'un système de stabilisation d'une tension d'alimentation d'un réseau électrique de bord d'un véhicule automobile selon l'invention.

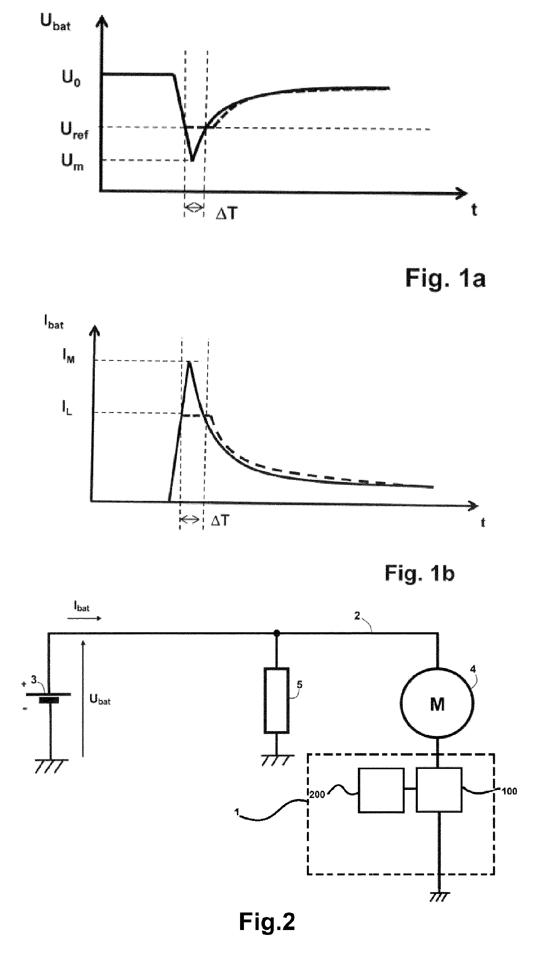

La **Figure 1a** montre en traits pleins l'évolution dans le temps de la tension U_{bat} aux bornes d'une batterie alimentant un réseau électrique de bord d'un véhicule automobile auquel est connecté un démarreur, au moment du lancement du moteur thermique, en l'absence de stabilisation.

A partir d'une valeur nominale U₀ (supposée positive) correspondant à une charge normale de la batterie, de l'ordre de 12 V, il se produit une variation de tension Uₘ - U₀ importante de la batterie, jusqu'au moment où, le moteur thermique étant lancé, la batterie revient à sa tension nominale U₀.

Le minimum de tension Uₘ peut être très inférieur à une tension de référence U_{ref}, de l'ordre de 7 à 9 V, fixée par les constructeurs d'automobiles comme seuil à ne pas dépasser.

Au minimum de tension Uₘ, correspond un pic d'intensité I_{M} du courant I_{bat} débité par la batterie, comme le montre bien la **Figure 1b** (traits plein).

En intervenant pendant tout l'intervalle de temps ΔT où la tension U_{bat} de la batterie tend à devenir inférieure à la tension de référence U_{ref}, la première unité de limitation de courant du système de stabilisation selon l'invention permet de maintenir la tension de batterie U_{bat} à cette tension de référence U_{ref}, comme le montre bien en traits en pointillés la **Figure 1a****.**

L'amplitude du pic d'intensité du courant débité I_{bat} sur le même intervalle ΔT est atténuée et présente une valeur limitée I_{L}, comme le montre bien en traits en pointillés la **Figure 1b**.

La **Figure 2** montre schématiquement un réseau de bord 2 comprenant un exemple de système de stabilisation 1 selon l'invention. Une batterie 3 alimente ce réseau 2 (la masse étant connectée au pôle négatif de la batterie 3) auquel est relié un démarreur électrique 4, apte à être accouplé mécaniquement au moteur thermique du véhicule au moment du lancement de celui-ci. Diverses autres charges électriques 5 sont habituellement reliées au réseau de bord 2. Ce sont ces charges électriques 5 qui peuvent avoir un fonctionnement perturbé par la chute de tension de la batterie 3 au moment du démarrage.

Dans le système de stabilisation 1, la première unité 100 limite le courant circulant entre la batterie 3 et le démarreur 4 en fonction de la variation de tension de la batterie 3, en particulier lors de l'activation du démarreur 4. La deuxième unité 200 limite le courant circulant entre la batterie 3 et le démarreur 4 à un seuil de courant Iₘₐₓ, en particulier lors de l'activation du démarreur 4. Notamment, ce seuil Iₘₐₓ est un courant maximum supportable par le démarreur 4. La deuxième unité 200 limite le courant circulant entre la batterie 3 et le démarreur 4 en imposant une intensité de référence à la première unité 100 de limitation indépendamment de la variation de tension de la batterie 3. Cette intensité de référence est notamment fonction du seuil de courant Iₘₐₓ auquel on souhaite limiter le courant circulant entre la batterie 3 et le démarreur 4. En particulier, cette intensité de référence est égale au seuil de courant Iₘₐₓ.

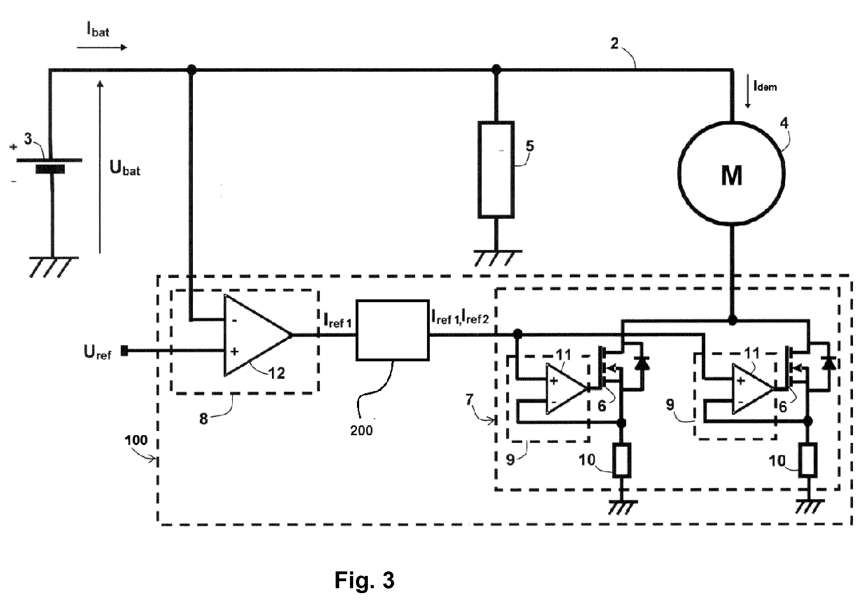

La **figure 3** montre un exemple de mise en oeuvre du système de stabilisation 1 dans lequel la deuxième unité de limitation 200 est imbriquée dans la première unité de limitation 100.

La première unité de limitation du système de stabilisation 1 est par exemple un régulateur linéaire 100 conçu pour stabiliser la tension de batterie U_{bat} pendant la phase de démarrage, en limitant l'appel de courant I_{dem} du démarreur 4 pour maintenir la tension de batterie U_{bat} au moins à la tension de référence U_{ref}. Le régulateur linéaire 100 comprend des transistors de type MOSFET en parallèle formant une résistance variable 6 en série avec le démarreur 4. Tant que la tension de batterie U_{bat} reste au dessus de la tension de référence U_{ref}, les transistors sont fermés (en régime saturé) et la résistance variable 6 est équivalente à une simple résistance de faible valeur R_{DS_ON} (de l'ordre de 1 mΩ).

Si la tension de batterie U_{bat} tombe en dessous de la tension de référence U_{ref} (variation de tension négative), la première unité 100 de limitation de courant du système de stabilisation 1 est activée et les transistors commencent à fonctionner en régime linéaire comme une résistance variable pour limiter le courant I_{dem} du démarreur 4.

Pendant cette phase, les transistors sont commandés par deux boucles de régulation 7, 8, une boucle de courant principal 7 et une boucle de tension 8.

La boucle de courant principale 7, d'une part, contrôle le courant circulant dans le démarreur 4 en fonction d'une première intensité de référence I_{ref1} ou d'une deuxième intensité de référence I_{ref2} décrite plus loin.

La boucle de tension 8, d'autre part, est en charge de fournir la première intensité de référence I_{ref1} nécessaire pour maintenir la tension de batterie U_{bat}, qui est aussi celle du réseau 2, au dessus de la tension de référence U_{ref}.

En tenant compte de la dissipation thermique des transistors travaillant en régime linéaire, il peut être nécessaire d'implémenter plusieurs transistors en parallèle.

En effet, comme cela a déjà été indiqué, le démarrage du moteur thermique exige une intensité I_{dem} de l'ordre de 1000 A et il n'existe pas actuellement de transistor de puissance capable de supporter une telle intensité sous quelques volts, c'est-à-dire une puissance de plusieurs kilowatts, en régime linéaire.

Malheureusement, quel que soit le soin apporté à l'appariement des transistors pour une caractéristique déterminée, par exemple la transconductance gₘ, la dispersion des autres paramètres (par exemple, la tension de seuil Vₜₕ) et les tolérances du montage mécanique conduisent habituellement à des ensembles déséquilibrés.

Si plusieurs transistors de type MOSFET sont connectés en parallèle sans résistance de grille, la tension grille-source est la même pour tous. Dans ces conditions, la tension de seuil Vₜₕ n'étant pas identique pour tous les transistors 6, il peut y avoir dans les pires cas de très grandes différences dans le partage du courant entre les transistors 6.

Ce problème est même accru en utilisant la nouvelle génération de transistors MOSFET supportant de fortes intensités à cause de sa transconductance élevée. Pour une même tension grille-source de commande de chacun des transistors 6, les courants dans les transistors peuvent très différents, et par conséquent, les dissipations thermiques peuvent être très différentes.

Le système de stabilisation 1 comporte donc une boucle de courant principale 7 formée de plusieurs boucles de courant secondaires 9 pour commander individuellement les transistors 6. De cette manière, la dissipation thermique des transistors est équilibrée.

Chaque boucle de courant secondaire 9 utilise un shunt 10 connecté à la masse pour mesurer un courant de source (dans le cas d'un MOSFET canal N tel que représenté; de drain, pour un MOSFET canal P) dans chaque transistor représentant la même fraction du courant I_{dem} circulant dans le démarreur 4 et le comparer à l'intensité de référence I_{ref1}, I_{ref2} au moyen d'un amplificateur opérationnel 11.

Cet amplificateur opérationnel 11 génère en sortie une tension grille-source qui commande l'impédance du transistor en régime linéaire pour asservir le courant de source à la fraction de l'intensité de référence I_{ref1}, I_{ref2} requise.

Chacun des transistors disposant d'une contre-réaction, la même intensité de référence I_{ref1}, I_{ref2}, ou plus exactement une tension représentative de cette intensité de référence I_{ref1}, I_{ref2}, peut être appliquée sur tous les amplificateurs opérationnels 11 qui les pilotent, quel que soit le nombre de transistors en parallèle.

La tension représentative de la première intensité de référence I_{ref1} est générée par la boucle de tension 8. A cet effet, la boucle de tension 8 utilise un autre amplificateur opérationnel 12 en fonction d'une différence de tension U_{ref} - U_{bat} de la batterie 3 par rapport à la tension de référence U_{ref}, la tension U_{bat} du réseau 2 étant appliquée à l'entrée inverseuse et la tension de référence U_{ref} étant appliquée à l'entrée non-inverseuse.

La mise en oeuvre de la première unité de 100 de limitation de courant illustrée en figure 3 présente l'avantage d'éviter les problèmes de compatibilité électromagnétique parce qu'il travaille en régime linéaire, et non en commutation. De plus, les moyens de contrôle des boucles de tension et de courant 7, 8, 9 étant analogiques, basés sur des amplificateurs opérationnels 11, 12, il n'est pas nécessaire d'utiliser des microcontrôleurs complexes.

La deuxième unité 200 de limitation de courant va être plus précisément décrite dans ce qui suit.

Le système de stabilisation 1, en particulier la première unité 100 de limitation de courant peut être paramétrée pour une résistance électrique donnée entre la batterie 3 et le démarreur 4. La première intensité de référence I_{ref1} est alors délivrée à la résistance variable 6. Cependant, lorsque la batterie est remplacée par un autre type de batterie, notamment lorsqu'une batterie en plomb est remplacée par une batterie Li/ion, la diminution de la résistance interne de la batterie entraine une diminution de la résistance électrique entre la batterie 3 et le démarreur 4. Pour éviter la circulation d'un courant trop élevé dans le démarreur 4. La deuxième unité 200 contrôle le courant circulant entre la batterie 3 et le démarreur 4 pour qu'il reste inférieur à un courant maximum iₘₐₓ supportable par le démarreur 4, notamment par les balais du démarreur 4.

Dans l'exemple de mise en oeuvre illustré en figure 3, lorsque la première intensité de référence I_{ref1} est supérieure ou égale au seuil iₘₐₓ, la deuxième unité 200 délivre la deuxième intensité de référence I_{ref2} à la place de la première intensité de référence I_{ref1}. Cette deuxième intensité de référence I_{ref2} est égale au seuil de courant maximum iₘₐₓ supportable par le démarreur 4, notamment par les balais du démarreur 4. Ainsi, le courant circulant dans le démarreur 4 reste limité à un courant inoffensif pour le démarreur 4.

L'exemple de mise en oeuvre illustré en figure 3 a l'avantage d'être compact et permet d'intégrer de façon simple la deuxième unité 200 de limitation de courant dans la première 100 unité.

On peut en outre prévoir que la deuxième unité 200 de limitation de courant reste active même lorsque la première unité 100 de limitation ne fonctionne pas. Ainsi, le démarreur électrique 4 est toujours protégé contre des courants trop élevés.

Comme il va de soi, l'invention ne se limite pas aux seuls exemples décrits ci-dessus.

Notamment, le type de transistors de puissance cité n'est pas limitatif; l'utilisation d'autres éléments à semi-conducteurs susceptibles de réaliser les mêmes fonctions que les MOSFETs ne sortirait pas du cadre de l'invention.

La mise en oeuvre d'amplificateurs opérationnels 11 intégrés n'est aussi qu'une possibilité pour réaliser les moyens de contrôle analogiques des boucles de courant 7, 9 ou de la boucle de tension 8; l'homme de métier pourra autant que de besoin implémenter les mêmes fonctions à moindre coût avec des éléments actifs discrets ou hybrides.

Plus généralement, le système 1 et les unités 100, 200 de limitation de courant pourraient être implémentés de manière différentes de celles illustrées en figures 2 et 3.

Dans l'exemple décrit le système de régulation 1 est situé entre le démarreur 4 et la masse. Cependant, le système 1 pourrait être situé entre la batterie 3 et le démarreur 4 sans modification du fonctionnement décrit précédemment. Plus particulièrement, le système 1 pourrait être situé sur la branche du démarreur 4 entre le démarreur 4 et l'extrémité de la branche qui est commune à la batterie 3.

L'exemple aurait pu être décrit de façon similaire avec un compresseur de suralimentation électrique à la place du démarreur 4, en particulier dans une application où le compresseur est activé transitoirement au démarrage du moteur thermique du véhicule.

L'invention embrasse toutes les variantes possibles de réalisation dans la limite de l'objet des revendications ci-après.

## Revendications

1. Système de stabilisation (1) d'une tension d'alimentation d'un réseau électrique de bord (2) d'un véhicule automobile, du type de ceux limitant une variation de tension d'une source de tension (3) alimentant ledit réseau (2) lors de l'activation d'un équipement électrique (4) dudit véhicule relié audit réseau (2), ledit système comprenant :
- une première unité de limitation (100) du courant circulant entre ladite source de tension (3) et ledit équipement (4), ladite unité (100) étant configurée de sorte à limiter le courant circulant entre la source de tension (3) et l'équipement électrique (4) en fonction d'une variation de tension de la dite source de tension (3) ;
- une deuxième unité de limitation (200) du courant circulant entre ladite source de tension (3) et ledit équipement (4), ladite unité (200) étant configurée de sorte à limiter le courant circulant entre la source de tension (3) et l'équipement électrique (4) à un seuil de courant (Iₘₐₓ).

2. Système de stabilisation (1) selon la revendication 1, dans lequel le seuil de courant (Iₘₐₓ) est fonction d'une puissance maximale, ou d'un courant maximal, supportés par ledit équipement électrique (4).

3. Système de stabilisation (1) selon la revendication 1 ou 2, dans lequel la première unité de limitation (100) est configurée de manière à asservir le courant circulant entre la source de tension (3) et l'équipement électrique (4) à une première intensité de référence (I_{ref1}), la dite première intensité de référence (I_{ref1}) étant fonction de ladite variation de tension.

4. Système de stabilisation (1) selon la revendication 3, dans lequel la première unité de limitation (100) est configurée de manière à asservir le courant circulant entre la source de tension (3) et l'équipement électrique (4) à la première intensité de référence (I_{ref1}) lorsque cette première intensité de référence (I_{ref1}) est inférieure en valeur absolue au seuil de courant (Iₘₐₓ) ; et la deuxième unité de limitation (200) est configurée de manière à asservir le courant circulant entre la source de tension (3) et l'équipement électrique (4) à la valeur du seuil de courant (Iₘₐₓ) lorsque cette première intensité de référence (I_{ref1}) est supérieure en valeur absolue au seuil de courant (Iₘₐₓ).

5. Système de stabilisation (1) selon l'une des revendications précédentes, dans lequel la deuxième unité (200) est configurée pour limiter le courant circulant entre ladite source de tension (3) et ledit équipement (4) en imposant une deuxième intensité de référence (I_{ref2}) à la première unité de limitation (100).

6. Système de stabilisation (1) selon l'une des revendications précédentes, dans lequel la première unité (100) comprend une résistance variable (6) en fonction de ladite variation de tension, ladite résistance variable (6) étant connectée en série avec ladite source de tension (3) et ledit équipement (4).

7. Système de stabilisation (1) selon la revendication précédente et les revendications 3 ou 4 et la revendication 5, dans lequel ladite résistance variable (6) est contrôlée par une boucle de courant principale (7) en fonction de la première intensité de référence (I_{ref1}) ou de la deuxième intensité de référence (I_{ref2}).

8. Système selon la revendication précédente, dans lequel la deuxième unité de limitation (200) délivre la deuxième intensité de référence (I_{ref2}) à ladite résistance variable (6) lorsque la première intensité de référence (I_{ref1}) est supérieure en valeur absolue au seuil de courant (Iₘₐₓ).

9. Système de stabilisation (1) selon l'une des revendications 6 à 8, dans lequel ladite résistance variable (6) comprend un ou plusieurs interrupteurs de puissance en parallèle configurés pour fonctionner en régime linéaire de manière à réaliser ladite résistance variable.

10. Procédé de stabilisation d'une tension d'alimentation d'un réseau électrique de bord (2) d'un véhicule automobile, du type de ceux limitant une variation de tension d'une source de tension (3) alimentant ledit réseau (2) lors de l'activation d'un équipement électrique (4) dudit véhicule relié audit réseau (2), ledit procédé comprenant :
- la limitation du courant circulant entre ladite source de tension (3) et ledit équipement (4) en fonction d'une variation de tension de la dite source de tension (3) ;
- la limitation du courant circulant entre ladite source de tension (3) et ledit équipement (4) à un seuil de courant (Iₘₐₓ).

11. Machine électrique destinée à être embarquée dans un véhicule automobile comportant un système de stabilisation (1) d'une tension d'alimentation (U_{bat}) d'un réseau électrique de bord (2) selon l'une quelconque des revendications 1 à 9 intégré.
